# DEMANDE DE BREVET EUROPEEN

(11) **EP 4 668 289 A1**
(43) Date de publication de la demande: **24.12.2025**
(21) Numéro de dépôt: 25181449.7
(22) Date de dépôt: 06.06.2025
(51) Int. Cl.: G21C 21/02, G21C 3/62

(54) **PROCÉDÉ DE PRÉPARATION D'UNE POUDRE COMPRENANT UN OU PLUSIEURS OXYDES CHOISIS PARMI L'OXYDE D'URANIUM UO2, L'OXYDE DE PLUTONIUM PUO2 ET LES OXYDES D'ACTINIDES MINEURS**

(30) Priorité: 17.06.2024 FR 2406367
(71) Demandeur: Commissariat à l'Energie Atomique et aux Energies Alternatives, 75015 Paris (FR)
(72) Inventeur: RAMOND, Laure, 30390 THEZIERS (FR); BERNARD-GRANGER, Guillaume, 84380 MAZAN (FR); DOREAU, Franck, 30330 TRESQUES (FR); PAGNOUX, Cécile, 87270 COUZEIX (FR); LA LUMIA, Florian, 13100 AIX-EN-PROVENCE (FR); SIGNORET, Patrice, 84200 CARPENTRAS (FR)
(74) Mandataire: Santarelli

(57) **Abrégé**

L'invention a trait à un procédé de préparation d'une poudre comprenant un ou plusieurs oxydes choisis parmi l'oxyde d'uranium UO₂, l'oxyde de plutonium PuO₂ et les oxydes d'actinides mineurs, les actinides mineurs étant choisis parmi l'américium, le neptunium et le curium, comprenant les étapes de :
a) granulation cryogénique d'une solution aqueuse comprenant des cations choisis parmi les cations à base d'uranium, les cations à base de plutonium et les cations à base d'actinides mineurs ;
b) lyophilisation des granules obtenus en a) ; et
c) calcination des granules issus de b).

Applications : fabrication de combustibles nucléaires ou de couvertures chargées en actinide(s) mineur(s).

## Description

### Domaine technique

L'invention a trait à un procédé de préparation d'une poudre comprenant un ou plusieurs oxydes choisis parmi l'oxyde d'uranium UO₂, l'oxyde de plutonium PuO₂ et les oxydes d'actinides mineurs.

On précise, pour la suite de l'exposé, que par actinide mineur, on entend les éléments actinides autres que l'uranium, le plutonium et le thorium, qui sont formés dans les réacteurs par captures successives de neutrons par les noyaux de combustible standard, les actinides mineurs étant l'américium, le curium et le neptunium.

De manière plus spécifique, l'invention concerne un procédé de préparation d'une poudre qui soit coulable, qui puisse être pressée sans mélange préalable et qui peut présenter, plus spécifiquement, les caractéristiques physico-chimiques spécifiques suivantes :
- une bonne aptitude à l'écoulement spontané ;
- une granulométrie homogène centrée dans la gamme de 5 µm à 500 µm ;
- une bonne homogénéité des éléments au sein des particules de la poudre, lorsque celle-ci comporte plusieurs éléments actinides différents ;
- un taux de carbone structural limité au sein des particules de la poudre ;
- un taux minimum de particules fines dans la poudre, afin d'éviter une dissémination de celles-ci au sein des équipements et des boîtes à gants ;
- une bonne aptitude au compactage ; et
- une excellente réactivité au frittage naturel.

De par les caractéristiques physico-chimiques susmentionnées, la poudre obtenue par le procédé de l'invention peut convenir à la préparation des matériaux suivants :
- des combustibles d'oxyde d'uranium UO₂ ;
- des combustibles d'oxyde mixte d'uranium et de plutonium (U,Pu)O₂, dits combustibles MOX, utilisés actuellement dans les réacteurs à eau légère, ou encore des combustibles MOX à fortes teneurs en plutonium pouvant être utilisés dans des réacteurs à neutrons rapides ;
- des couvertures chargées en actinide(s) mineur(s), telles que des cibles de transmutation à base d'actinide(s) mineur(s) destinées à effectuer des expériences de transmutation nucléaire dans des réacteurs à neutrons rapides, notamment en vue de mieux comprendre le mécanisme de transmutation de ces éléments actinides mineurs, ces cibles pouvant consister en un matériau du type MOX contenant de 1 % à 5 % en masse d'actinide(s) mineur(s) (ce matériau pouvant être symbolisé par la formule (U,Pu, Am,Np,Cm)O₂) ou en un matériau comprenant une matrice d'oxyde d'uranium comprenant de 10 % à 20 % en masse d'actinide(s) mineur(s) (ce matériau pouvant être symbolisé par la formule (U,Am,Np,Cm)O₂).

### État de la technique antérieure

La fabrication de combustibles d'oxyde mixte d'uranium et de plutonium (U,Pu)O₂, dits combustibles MOX, a fait l'objet de divers développements liés à la volonté de recycler le plutonium récupéré lors du traitement des combustibles nucléaires usés. Le recyclage du plutonium par la fabrication et l'irradiation de combustibles MOX est aujourd'hui considéré comme un moyen de limiter la prolifération du plutonium.

Plusieurs procédés de fabrication des combustibles MOX ont été développés au cours des deux dernières décennies, certains faisant appel à un broyage complet des poudres d'UO₂ et de PuO₂ pour assurer un mélange intime, d'autres se limitant au broyage d'une fraction seulement de ces poudres.

Actuellement, la préparation de l'oxyde mixte (U,Pu)O₂ se fait par mélange mécanique à sec des poudres d'oxydes UO₂ et PuO₂. Le mélange obtenu permet, après pressage, frittage et rectification, de produire des pastilles de combustible MOX satisfaisant aux spécifications actuelles. Le procédé industriel le plus éprouvé comporte deux étapes principales dans la préparation des poudres : un cobroyage des poudres d'oxyde d'uranium et d'oxyde de plutonium pour fabriquer un premier mélange, appelé mélange-mère, qui se caractérise par une teneur en plutonium de 25 % à 30 %, puis une dilution à sec de ce mélange-mère avec de l'oxyde d'uranium, jusqu'à obtention de la teneur finale en plutonium souhaitée.

La poudre de PuO₂ utilisée dans la fabrication des combustibles MOX provient du traitement des combustibles d'uranium usés, issus des réacteurs à eau légère. Ce traitement est réalisé *via* le procédé PUREX par extraction liquide-liquide. À l'issue de ce procédé, il est obtenu des solutions concentrées de nitrate d'uranyle appauvri d'une part, et de nitrate de plutonium d'autre part. La solution concentrée de nitrate de plutonium est ensuite convertie en une poudre d'oxyde de plutonium PuO₂ par précipitation oxalique du plutonium, filtration de la solution d'oxalate de plutonium ainsi obtenue, puis essorage, séchage et calcination du précipité d'oxalate de plutonium.

D'autres procédés d'extraction liquide-liquide ont également été mis au point pour une récupération sélective des actinides mineurs (telle que l'extraction sélective de l'américium par le procédé EXAm ou l'extraction groupée des actinides mineurs américium, curium et neptunium par les procédés GANEX ou SANEX).

Pour la fabrication des combustibles MOX, les poudres d'oxydes UO₂ et PuO₂ utilisées doivent répondre à des caractéristiques précises. Elles doivent avoir notamment une bonne aptitude à l'écoulement, de bonnes caractéristiques de compressibilité et une aptitude à la densification par frittage. L'homogénéité de répartition du plutonium est un critère important de qualité dans les propriétés finales du matériau fritté. Une bonne homogénéité, dans chaque pastille frittée, est, d'une part, tout à fait favorable pour le comportement du combustible MOX en réacteur, notamment dans une perspective d'accroissement des taux de combustion et facilite, d'autre part, la complète dissolution des combustibles usés lors des opérations de traitement de ces combustibles.

Quant aux cibles de transmutation, elles ont fait l'objet d'études poussées pour, outre leurs finalités mentionnées plus haut, permettre un recyclage des actinides mineurs issus du traitement des combustibles usés provenant des réacteurs à eau pressurisée.

Ce type de recyclage s'opère par deux voies distinctes connues sous les appellations suivantes : recyclage hétérogène et recyclage homogène.

Dans le cas du recyclage hétérogène, les actinides mineurs sont séparés, lors du traitement d'un combustible usé, de l'uranium et du plutonium, et sont ensuite incorporés, à une teneur élevée (environ de 10 % à 20% atomiques), dans des éléments de combustible comprenant une matrice non fissile (par exemple, UO₂ appauvri) distincts des éléments de combustible standard du réacteur. Les éléments de combustible comprenant les actinides mineurs peuvent consister, par exemple, en des éléments de couverture disposés en périphérie du cœur d'un réacteur. Cette voie de recyclage permet, notamment, d'éviter de dégrader les caractéristiques du combustible standard par une incorporation d'actinides mineurs en concentrant les problèmes générés par ces actinides sur un flux de matière réduit.

Dans le cas du recyclage homogène, les actinides mineurs sont mélangés, à une faible teneur (inférieure à 5 % atomiques), répartis de façon quasi uniforme dans la totalité des éléments de combustible standard du réacteur. Pour ce faire, lors du traitement des combustibles usés, l'uranium, le plutonium et les actinides mineurs sont traités ensemble pour former des oxydes, lesquels sont ensuite utilisés dans la fabrication desdits combustibles.

Que ce soit pour la fabrication de combustibles nucléaires ou de cibles de transmutation, les procédés récemment proposés tendent à se diriger vers des techniques limitant la dissémination de particules fines (et, de ce fait, l'empoussièrement des boites à gants dans lesquelles ces combustibles ou ces cibles sont fabriqués) et améliorant l'homogénéité des éléments au sein des pastilles.

C'est le cas du procédé WAR (de *Weak Acid Resin,* ainsi dénommé parce qu'il est basé sur l'utilisation d'une résine échangeuse d'ions faiblement acide), qui vise à obtenir des sphérules homogènes d'oxydes mixtes (U,Am)O₂ sans passer par une phase de granulation, ce qui limite fortement la dissémination de particules fines, contrairement aux procédés conventionnels de métallurgie des poudres, qui mettent en œuvre des étapes de granulation, telles que le broyage, le tamisage et le mélangeage.

Un autre procédé impliquant une phase d'atomisation-séchage d'une suspension aqueuse comprenant une poudre d'UO₂ obtenue par voie sèche à partir d'UF₆ a été décrit dans la demande internationale WO-A-00/30978, ci-après référence [1]. Ce procédé, bien que ne recourant pas à des étapes de broyage, de tamisage et de mélangeage, reste toutefois générateur d'un taux non négligeable de particules fines lors de l'atomisation.

Enfin, il a été proposé dans la demande internationale WO-A-2019/038497, ci-après référence [2], un procédé permettant également d'éviter la formation et la dissémination de particules fines au cours de la fabrication de combustibles nucléaires ou de cibles de transmutation et qui consiste à soumettre à une granulation cryogénique une suspension aqueuse comprenant une poudre d'UO₂ et, éventuellement, une poudre de PuO₂ et/ou une poudre d'un oxyde d'un actinide mineur, puis à lyophiliser les granules ainsi obtenus, après quoi ils peuvent être directement compactés en pastilles. Si ce procédé présente indéniablement de nombreux avantages dont celui de conduire à l'obtention de particules d'oxyde(s) aux caractéristiques physico-chimiques remarquables tout en limitant le risque de dissémination de particules fines, il ne supprime pas totalement ce risque puisque la granulation cryogénique est réalisée sur une suspension aqueuse comprenant une ou plusieurs poudres d'oxydes dont la préparation peut, elle-même, avoir été source de dissémination.

Les inventeurs se sont donc fixé pour objectif de fournir un nouveau procédé de préparation d'une poudre comprenant un ou plusieurs oxydes d'actinides qui, tout en conduisant à l'obtention de particules d'oxyde(s) aux propriétés physico-chimiques tout aussi intéressantes que celles des particules obtenues par le procédé de la référence [2], réduise encore davantage le risque de dissémination de particules fines.

Ils se sont de plus fixé pour objectif que ce procédé permette en outre de :
- s'affranchir des contraintes inhérentes à la préparation des poudres d'oxydes d'actinides et, notamment, à celle du PuO₂, les opérations de précipitation oxalique et de filtration pouvant générer des problèmes de colmatage des filtres et, par là même, d'approvisionnement du four servant à la calcination du précipité d'oxalate de plutonium ;
- minimiser, pour les poudres obtenues à l'issue du procédé, les problèmes de mise en forme à cru, par exemple, par pressage à sec grâce à l'optimisation et la robustesse des propriétés rhéologiques des poudres obtenues ; et
- minimiser, lors de la fabrication des pastilles à partir des poudres obtenues à l'issue du procédé, le taux de rebut grâce à la minimisation des problèmes inhérents à la mise en forme à cru et en ayant, lorsque les poudres contiennent d'autres éléments que l'uranium, une distribution homogène des différents éléments.

### Exposé de l'invention

L'invention a trait à un procédé de préparation d'une poudre comprenant un ou plusieurs oxydes choisis parmi l'oxyde d'uranium UO₂, l'oxyde de plutonium PuO₂ et les oxydes d'actinides mineurs, les actinides mineurs étant choisis parmi l'américium, le neptunium et le curium, comprenant les étapes de :
a) granulation cryogénique d'une solution aqueuse comprenant des cations choisis parmi les cations à base d'uranium, les cations à base de plutonium et les cations à base d'actinides mineurs ;
b) lyophilisation des granules obtenus en a) ; et
c) calcination des granules issus de b) ;
moyennant quoi la poudre est obtenue.

Ainsi, selon l'invention, c'est une solution aqueuse contenant des cations « précurseurs » de l'oxyde ou du mélange d'oxydes destiné à être présent dans la poudre que l'on soumet à une granulation cryogénique et non, une suspension aqueuse comprenant une poudre d'oxyde ou un mélange de poudres d'oxydes comme dans la référence [2].

Outre de remplir les objectifs déjà mentionnés ci-avant, le procédé de l'invention présente également les avantages suivants :
- l'utilisation de l'eau comme solvant particulièrement intéressante, car elle permet de limiter l'utilisation des produits organiques et ainsi de limiter les impuretés dans la poudre finalement obtenue ;
- la mise en œuvre simple, rapide, reproductible et conduisant, lors de l'étape a), à une solution qui peut être amenée par simple pompage jusqu'à la buse d'injection d'un appareil de granulation cryogénique sans aucune difficulté ;
- l'utilisation combinée d'une solution, de la granulation cryogénique et de la lyophilisation permettant l'obtention d'une poudre comprenant des particules à porosité contrôlée, pleines et bien sphériques avec une bonne homogénéité de répartition des éléments et une bonne coulabilité ;

- la possibilité d'obtenir des poudres en s'affranchissant des étapes de précipitation oxalique et de filtration habituellement mises en œuvre pour récupérer l'uranium et, le cas échéant, le plutonium à partir de solutions nitriques ; et
- la possibilité de mettre en œuvre ce procédé dans une unité de production de capacité industrielle en tenant compte de la criticité et donc de la géométrie des appareils.

Comme précédemment indiqué, l'étape a) consiste en une étape de granulation cryogénique de la solution aqueuse susmentionnée, cette étape pouvant consister à pulvériser ou atomiser - les deux mots étant considérés ici comme synonymes - cette solution sous forme de gouttelettes, par exemple, en faisant passer cette solution dans une buse, et à mettre les gouttelettes ainsi formées en contact avec un liquide à très basse température (par exemple, de l'azote liquide) pour figer les gouttelettes dans leur forme.

Une telle étape a) peut être effectuée dans un dispositif de granulation commercial ou dans un dispositif préparé spécialement en laboratoire pour la mise en œuvre de cette étape. Ce dispositif peut être constitué d'une pompe péristaltique qui permet d'acheminer la solution aqueuse vers une buse pour permettre la granulation de la solution. Les microgouttelettes formées et projetées par la buse tombent dans un Dewar rempli d'azote liquide sous agitation (au moyen, par exemple, d'un barreau magnétique) et sont directement figées sous forme sphérique.

Dans la solution aqueuse soumise à l'étape a), les cations, qu'ils soient à base d'uranium, de plutonium, d'américium, de neptunium et/ou de curium, peuvent être associés à des anions pour former des composés salins et/ou peuvent être associés à des ligands organiques pour former des complexes, et, plus spécifiquement, des complexes de coordination.

La solution aqueuse soumise à l'étape a) est, avantageusement, une solution aqueuse nitrique (ou, en d'autres termes, une solution aqueuse d'acide nitrique, par exemple de concentration allant de 0,5 mol/L à 15 mol/L, de préférence, entre 1 mol/L et 8 mol/L). Dans un tel contexte, si des cations à base d'uranium sont présents, ces cations sont des cations uranyles UO₂²⁺ coexistant avec des ions nitrates pour former du nitrate d'uranyle UO₂(NO₃)₂ ; si des cations à base de plutonium sont présents, alors ces cations sont des cations Pu⁴⁺ associés à des ions nitrates pour former du nitrate de plutonium Pu(NO₃)₄, tandis que si des cations à base d'un ou plusieurs actinides mineurs sont présents, alors ces cations sont des cations M^{x+} associés à des ions nitrates pour former un ou plusieurs nitrates M(NO₃)ₓ (M désignant Am, Np ou Cm et x allant de 3 à 6, la valeur de x étant fixée de sorte à assurer l'électroneutralité de M(NO₃)ₓ).

Cette solution aqueuse nitrique peut provenir, en particulier, des procédés d'extraction liquide-liquide tels que le procédé PUREX ou GANEX/EXAm, la concentration de cette solution pouvant être ajustée préalablement par évaporation avant la mise en œuvre du procédé de l'invention.

Il va de soi que le procédé ne se limite pas à la granulation cryogénique d'une solution aqueuse nitrique comprenant des cations associés à des ions nitrates et que d'autres solutions aqueuses acides comme, par exemple, une solution aqueuse d'acide sulfurique dans laquelle les cations sont associés à des ions sulfates est susceptible de convenir.

La solution aqueuse soumise à l'étape a) comprend, en particulier, une concentration totale en élément(s) actinide(s) (uranium et/ou plutonium et/ou actinide(s) mineur(s)) allant de 5 g/L à 300 g/L.

Lorsque la solution aqueuse soumise à l'étape a) est une solution aqueuse de cations à base d'uranium, il est possible qu'elle comprenne une quantité infime de cations à base de plutonium en fonction du procédé par lequel cette solution a été obtenue. À l'inverse, lorsque la solution aqueuse soumise à l'étape a) est une solution aqueuse de cations à base de plutonium, il est possible qu'elle comprenne une quantité infime de cations à base d'uranium en fonction du procédé par lequel cette solution a été obtenue.

Conformément à l'invention, il est également possible que la solution aqueuse soumise à l'étape a) comprenne des cations à base d'uranium et des cations à base de plutonium (mais sans cations à base d'actinides mineurs) avec une proportion molaire (ou atomique) en plutonium (telle que déterminée par le rapport Pu/(U+Pu)) pouvant aller de 1 % à 99 % en fonction de la destination de la poudre que l'on souhaite préparer (usage à des fins de recherches scientifiques, usage à des fins dans la fabrication expérimentale ou industrielle de combustibles nucléaires neufs, etc.).

À titre d'exemples, pour la fabrication de combustibles MOX destinés à des réacteurs nucléaires à eau légère ou REL (réacteurs à eau pressurisée et réacteurs à eau bouillante), alors la solution aqueuse soumise à l'étape a) présente, de préférence, une proportion molaire (ou atomique) en plutonium allant de 3 % à 12 % tandis que, pour la fabrication de combustibles MOX destinés à des réacteurs nucléaires à neutrons rapides ou RNR, alors ladite solution aqueuse présente, de préférence, une proportion molaire (ou atomique) en plutonium allant de 15 % à 40 %.

Lorsque la solution comprend des cations à base d'uranium et des cations à base d'un ou plusieurs actinides mineurs (mais sans cations à base de plutonium), alors la proportion molaire (ou atomique) en actinide(s) mineur(s) va, de préférence, de 1 % à 50 % (celle-ci étant déterminée par le rapport M/(U+M)), M représentant le ou les actinides mineurs).

Par ailleurs, la solution aqueuse soumise à l'étape a) peut comprendre au moins un additif choisi parmi les polymères organiques hydrosolubles, les composés organiques azotés et les mélanges de ceux-ci, ce ou ces additifs étant avantageusement présents en une quantité telle que la viscosité dynamique (pour un taux de cisaillement de 1500 s⁻¹) de la solution aqueuse ne dépasse pas 1 000 mPa.s et, de préférence, ne dépasse pas 100 mPa.s.

L'intérêt d'utiliser de tels additifs réside dans leur capacité à augmenter la viscosité de la solution, afin de maîtriser la forme des granules obtenus ultérieurement lors de l'étape de granulation cryogénique.

À titre d'exemples de polymères organiques hydrosolubles, on peut citer l'alcool polyvinylique (PVA), un polyéthylène glycol (PEG), un poly(butyral de vinyle) (connu sous l'abréviation PVB), un latex acrylique ou un mélange de ceux-ci.

À titre d'exemples de composés organiques azotés, il peut être fait mention des composés amides ou des composés amines.

La viscosité dynamique est classiquement mesurée à l'aide d'un rhéomètre pour un taux de cisaillement de 1500 s⁻¹ avec un système de configuration cône cylindre à température et pression ambiantes (c'est-à-dire sans qu'il ne soit appliqué de chauffage et de mise sous pression externes autres que la température et la pression de l'atmosphère ambiante, la température ambiante pouvant être une température de 20 °C et la pression ambiante étant la pression atmosphérique). De toute préférence, la viscosité dynamique ne dépasse pas 100 mPa.s, ce qui correspond à une solution très fluide, qui pourra circuler aisément à travers les tuyaux d'alimentation et la buse d'atomisation du dispositif de granulation cryogénique.

En outre, la solution peut comprendre un ou plusieurs agents stabilisants des complexes, lorsque les cations à base d'uranium, les cations à base de plutonium et/ou les cations à base d'un ou plusieurs actinides mineurs sont associés à des ligands organiques, pour former des complexes.

Préalablement à l'étape a), le procédé de l'invention peut comprendre une étape de préparation de la solution comprenant des cations à base d'uranium, des cations à base de plutonium et/ou des cations à base d'un ou plusieurs actinides mineurs par mise en contact des différents ingrédients de cette solution et dans les proportions souhaitées.

À titre d'exemple, la solution aqueuse peut être préparée par mise en contact puis mélange de différentes solutions nitriques comprenant les différents éléments désirés suivis éventuellement d'une concentration par évaporation de l'eau afin d'accéder aux concentrations souhaitées.

Selon le procédé de l'invention, après l'étape de granulation cryogénique, les granules obtenus sont soumis à une étape de lyophilisation, par exemple, en les plaçant dans un lyophilisateur pour permettre la sublimation de l'eau congelée et conserver la forme des granules (et notamment leur sphéricité) et leurs individualités.

À la fin de la lyophilisation, l'humidité résiduelle des granules est très faible, ce qui permet d'éviter de sécher ces granules avant leur calcination.

Lorsque la solution aqueuse soumise à l'étape a) est une solution aqueuse d'acide nitrique, les granules issus de l'étape de lyophilisation sont des granules comprenant du nitrate d'uranyle UO₂(NO₃) et/ou du nitrate de plutonium Pu(NO₃)₄ et/ou un ou plusieurs nitrates M(NO₃)ₓ (M désignant Am, Np ou Cm et x allant de 3 à 6, la valeur de x étant fixée de sorte à assurer l'électroneutralité de M(NO₃)ₓ).

Après l'étape de lyophilisation, le procédé de l'invention comprend une étape de calcination des granules.

Cette calcination peut être oxydante ou réductrice, ou bien oxydante puis réductrice suivant les éléments actinides retenus et l'ajustement valenciel désiré.

Si les granules sont exempts de cations à base d'uranium, c'est-à-dire qu'ils ne comprennent que des cations à base de plutonium ou que des cations à base d'un ou plusieurs actinides mineurs ou encore qu'un mélange de cations à base de plutonium et de cations à base d'un ou plusieurs actinides mineurs, alors la calcination peut être réalisée en une seule étape, c'est-à-dire soit sous atmosphère oxydante soit sous atmosphère réductrice, préférence étant toutefois donnée à une atmosphère oxydante.

Si les granules comprennent des cations à base d'uranium (seuls ou avec d'autres cations), alors la calcination peut être réalisée en une seule étape sous atmosphère réductrice mais on préfère qu'elle soit réalisée en deux étapes successives, une première étape sous atmosphère oxydante permettant l'élimination des éventuelles matières organiques et la formation d'U₃O₈, suivie d'une deuxième étape sous atmosphère réductrice permettant la conversion d'U₃O₈ en UO₂.

La calcination sous atmosphère oxydante peut consister en une opération de chauffage, par exemple sous air ou sous une atmosphère enrichie en oxygène telle qu'une atmosphère comprenant 80 % en volume d'oxygène à une température pouvant aller de 100 °C à 1 200 °C, de préférence inférieure à 800 °C pendant une durée pouvant aller jusqu'à 12 heures, de préférence inférieure à 4 heures. Cette calcination est isomorphe, en ce sens que sa mise en œuvre n'affecte pas la forme des granules soumis à cette étape.

La calcination sous atmosphère réductrice peut consister en une opération de chauffage, par exemple sous argon hydrogéné, à une température pouvant aller de 300 °C à 1 200°C, de préférence inférieure à 900°C, pendant une durée pouvant aller jusqu'à 12 heures, de préférence inférieur à 4 heures.

À l'issue du procédé de l'invention, il résulte une poudre pouvant présenter spécifiquement les caractéristiques suivantes :
- une granulométrie homogène centrée dans la gamme de 5 µm à 500 µm ;
- une cohésion suffisante des granules pour résister aux manipulations pour la préparation de pastilles ;
- d'excellentes propriétés d'écoulement, notamment une bonne aptitude à l'écoulement spontané ;
- une bonne aptitude au compactage ;
- une excellente aptitude au frittage naturel ;
- une bonne homogénéité de répartition des éléments au sein de la poudre, lorsque la poudre comporte plusieurs éléments actinides (uranium et/ou plutonium et/ou actinide(s) mineur(s)); et
- un minimum de particules fines au sein de la poudre, limitant ainsi les risques de dissémination et de contamination.

La sphéricité quasi-parfaite de ces granules permet une très bonne coulabilité dans les moules de pressage pour l'obtention de pastilles qui seront ensuite frittées.

Quant à l'homogénéité de répartition des éléments, elle est particulièrement importante par rapport à l'élément plutonium si celui-ci est présent. Une fois la poudre compactée et frittée pour en faire un combustible MOX, l'homogénéité de répartition du plutonium est tout à fait favorable pour le comportement du combustible en réacteur, notamment dans une perspective d'accroissement des taux de combustion et facilite, par ailleurs, la complète dissolution du combustible usé lors des opérations futures de traitement.

Conformément à l'invention, la poudre est de, préférence, une poudre d'UO₂, une poudre de PuO₂, une poudre comprenant un mélange d'UO₂ et de PuO₂ telle qu'une poudre présentant un rapport molaire Pu/(U+Pu) de 12 % (type REL) ou de 30 % (type RNR), toute préférence étant donnée à une poudre comprenant un mélange d'UO₂ et de PuO₂.

La poudre obtenue selon le procédé de l'invention peut être utilisée directement (c'est-à-dire sans nécessiter l'adjonction d'autres ingrédients) pour constituer un matériau compacté, par exemple, sous forme de pastilles de combustible nucléaire.

Ainsi, l'invention a trait également à un procédé de préparation de pastilles d'un combustible nucléaire comprenant successivement les étapes de :
i) mise en œuvre du procédé de préparation d'une poudre tel que défini ci-dessus ;
ii) compactage sous forme de pastilles de la poudre obtenue en i) ; et
iii) frittage des pastilles obtenues en ii).

L'étape de compactage ii) peut consister, d'une part, à placer la poudre dans un moule de forme adaptée pour former une ou plusieurs pastilles et, d'autre part, à soumettre cette poudre à un pressage uniaxial, par exemple, à l'aide d'un piston appliquant une pression sur la poudre placée dans le moule, cette pression pouvant aller de 150 MPa à 1 000 MPa pendant une durée pouvant s'échelonner de 1 seconde à 10 minutes.

L'étape de frittage iii) peut consister à chauffer les pastilles susmentionnées, par exemple, à une température allant de 1000 °C à 1 800 °C, pendant une durée de palier pouvant s'échelonner de 1 heure à 8 heures, de préférence de 3 heures à 5 heures, sous une atmosphère de gaz neutre, tel que l'argon, comprenant éventuellement de l'hydrogène sec ou humidifié, l'hydrogène pouvant être présent dans le mélange à une teneur pouvant aller jusqu'à 5 % en volume et l'eau pouvant être présente dans le mélange à une teneur pouvant aller jusqu'à 20 000 ppm.

Ainsi, par exemple, le frittage de pastilles d'UO₂ peut être réalisé aussi bien sous une atmosphère uniquement constituée d'argon que sous un mélange d'argon et d'hydrogène sec ou humidifié tandis que, pour le frittage de pastilles comprenant un mélange d'UO₂ et de PuO₂, on utilise typiquement un mélange d'argon et d'hydrogène sec ou humidifié.

En variante, entre l'étape i) et l'étape ii), il peut être ajouté à la poudre issue de l'étape i), une poudre d'un oxyde d'uranium, telle qu'une poudre de U₃O₈, une poudre de PuO₂ et/ou au moins une poudre d'un oxyde d'actinide mineur dans le but d'ajuster la composition visée, si besoin est.

En tout état de cause, le combustible nucléaire est, de préférence, un combustible MOX.

D'autres caractéristiques et avantages de l'invention apparaîtront du complément de description qui suit, qui se rapporte à un exemple de préparation d'une poudre mixte et de pastilles de combustibles selon des modes de réalisation conformes aux procédés de l'invention.

Bien entendu, ce complément de description n'est donné qu'à titre d'illustration de l'invention et n'en constitue en aucun cas une limitation.

### Exposé détaillé de modes de réalisation particuliers

### Exemple 1 : préparation d'une poudre mixte UO₂/PuO₂

Cet exemple illustre la mise en œuvre du procédé de l'invention pour la préparation d'une poudre mixte comprenant de l'oxyde d'uranium UO₂ et de l'oxyde de plutonium PuO₂ dans un rapport Pu/(U+Pu) de 10 % massiques, cette préparation étant entièrement réalisée en boîte à gants.

Une solution aqueuse d'acide nitrique à 5 mol/L, comprenant du nitrate d'uranyle et du nitrate de plutonium dans un rapport Pu/(U+Pu) d'environ 10 % massiques (U] = 200 g/L ; [Pu] = 21 g/L), du polyéthylène glycol 3 400 à 2 % massiques et présentant une viscosité dynamique inférieure à 20 mPa.s, est placée dans un bécher pour être prélevée par une pompe péristaltique (débit de 33 mL/min, pression d'air de 15 kPa) et pulvérisée à travers une buse qui permet de générer des gouttelettes de cette solution.

La viscosité dynamique susmentionnée est mesurée au moyen d'un rhéomètre ANTON PAAR RHEOLAB QC, à un taux de cisaillement de 1500 s⁻¹.

Les gouttelettes ainsi générées tombent dans un vase Dewar rempli d'azote liquide, sous agitation magnétique à 300 rpm, moyennant quoi elles sont congelées instantanément et constituent des granules qui conservent la forme d'origine des gouttelettes.

Après la granulation cryogénique, les granules sont rapidement placés dans un lyophilisateur, dans le but de sublimer l'eau congelée et de conserver leur forme sphérique, cette opération prenant plusieurs heures. Lorsque toute l'eau est évacuée des granules, ceux-ci sont calcinés sous une atmosphère oxydante (à 80 % en volume d'O₂), à 600 °C pendant 1 heure, pour transformer les nitrates en oxydes, tout en conservant leur morphologie, puis sous atmosphère réductrice (par exemple sous argon hydrogéné) pour réduire la phase U₃O₈ en UO₂ et conduire à une poudre comprenant à la fois de l'UO₂ et du PuO₂.

La poudre est prête à pressée sous forme de pastilles avant l'étape de frittage.

La granulation cryogénique susmentionnée est mise en œuvre dans un dispositif comprenant les éléments suivants :
- un bécher qui accueille la solution aqueuse, ce bécher étant lié à une pompe péristaltique qui permet d'acheminer cette solution jusqu'à une buse de pulvérisation, le débit de la pompe étant de 2 L/h au maximum avec une pression d'air de 15 kPa ; et
- un vase Dewar rempli d'azote liquide, muni d'une agitation magnétique (300 rpm), qui est connecté à la buse de pulvérisation et permet la congélation instantanée des gouttelettes de solution formées par cette buse.

### Exemple 2 : préparation de pastilles d'UO₂/PuO₂

Cet exemple illustre la préparation de pastilles d'un combustible nucléaire à partir de la poudre obtenue à l'exemple 1 ci-dessus.

Pour ce faire, la poudre est soumise à un pressage uniaxial à froid à 500 MPa avec une lubrification externe à l'acide stéarique, moyennant quoi on obtient des pastilles de 4,5 mm de diamètre et de 4 mm de hauteur. Ces pastilles sont ensuite soumises à une opération de frittage pendant 4 heures à 1 700 °C, sous atmosphère d'argon à 4 % en volume d'hydrogène et 1 200 vpm d'eau, la température de 1 700 °C étant atteinte par une montée en température de 2 °C/min sous une atmosphère d'argon à 4 % en volume d'hydrogène sec.

Les pastilles ainsi frittées présentent des densités relatives d'environ 94-96 % avec une bonne homogénéité des éléments U et Pu au sein des pastilles (grâce à une bonne homogénéité de ces éléments au sein de la poudre).

### Exemple 3 : préparation de pastilles d'UO₂/PuO₂

Dans cet exemple, on prépare des pastilles de 4,5 mm de diamètre et de 4 mm de hauteur, à partir d'une poudre comprenant de l'oxyde d'uranium UO₂ et de l'oxyde de plutonium PuO₂ dans un rapport Pu/(U+Pu) de 10 % atomiques, cette poudre ayant été obtenue par un procédé similaire à celui décrit dans l'exemple 1 ci-dessus à ceci près qu'il n'a pas été ajouté de polyéthylène glycol dans la solution aqueuse soumise à la granulation cryogénique.

Pour l'obtention des pastilles, la poudre est soumise à un pressage uniaxial à froid à 600 MPa, avec une lubrification externe à l'acide stéarique (pas de lubrification interne des granules), puis les pastilles sont frittées pendant 4 heures à 1 700 °C, sous atmosphère d'argon à 4 % en volume d'hydrogène et 1 200 vpm d'eau, la température de 1 700 °C étant atteinte par une montée en température de 2 °C/min sous atmosphère d'argon à 4 % en volume d'hydrogène sec.

Les pastilles obtenues ont des densités relatives comprises entre 97 % et 98 % avec une bonne homogénéité des éléments U et Pu au sein des pastilles (due à la bonne homogénéité de ces éléments au sein des granules).

### Exemple 4 : préparation d'une poudre et de pastilles d'UO₂

Dans cet exemple, on prépare une poudre d'UO₂ en plaçant une solution aqueuse d'acide nitrique à 1 mol/L, comprenant du nitrate d'uranyle, dans un bécher pour être prélevée par une pompe péristaltique (débit de 40 mL/min, pression d'air de 30 kPa) et pulvérisée à travers une buse qui permet de générer des gouttelettes de cette solution.

Les gouttelettes ainsi générées tombent dans un vase Dewar rempli d'azote liquide, sous agitation magnétique à 300 rpm, moyennant quoi on obtient des granules.

Ces granules sont rapidement placés dans un lyophilisateur pendant plusieurs heures. Lorsque toute l'eau est évacuée des granules, ceux-ci (10-300 µm) sont calcinés sous une atmosphère oxydante (à 80 % en volume d'oxygène), à 600 °C pendant 1 heure. Une étape de réduction sous une atmosphère d'argon à 4,3 % d'hydrogène est ensuite réalisée à 750 °C pendant 1 heure pour réduire U₃O₈ en UO₂.

La poudre d'UO₂ ainsi obtenue est ensuite pressée sous la forme de pastilles de 4,5 mm de diamètre et de 4 mm de hauteur par pressage uniaxial à froid à 500 MPa, avec lubrification externe à l'acide stéarique (pas de lubrification interne des granules), puis les pastilles sont frittées pendant 4 heures à 1 700 °C, sous atmosphère d'argon à 4 % en volume d'hydrogène et 1 200 vpm d'eau, la température de 1 700 °C étant atteinte par une montée en température de 2 °C/min sous une atmosphère d'argon à 4 % d'hydrogène sec.

Les pastilles obtenues ont des densités relatives d'environ 93 %.

### Exemple 5 : préparation d'une poudre de PuO₂

Cet exemple illustre la mise en œuvre du procédé de l'invention pour la préparation d'une poudre comprenant de l'oxyde de plutonium PuO₂, cette préparation étant entièrement réalisée en boîte à gants.

Une solution aqueuse d'acide nitrique à 1,5 mol/L, comprenant du nitrate de plutonium ([Pu] = 35 g/L) est placée dans un bécher pour être prélevée par une pompe péristaltique (débit de 33 mL/min, pression d'air de 15 kPa) et pulvérisée à travers une buse qui permet de générer des gouttelettes de cette solution.

Les gouttelettes ainsi générées tombent dans un vase Dewar rempli d'azote liquide, sous agitation magnétique à 300 rpm, moyennant quoi elles sont congelées instantanément et constituent des granules qui conservent la forme d'origine des gouttelettes.

Après la granulation cryogénique, les granules sont rapidement placés dans un lyophilisateur, dans le but de sublimer l'eau congelée et de conserver leur forme sphérique, cette opération prenant plusieurs heures. Lorsque toute l'eau est évacuée des granules, ceux-ci sont calcinés sous une atmosphère oxydante (à 80 % en volume d'O₂), à 600 °C pendant 30 minutes pour transformer le nitrate de plutonium en PuO₂.

La poudre de PuO₂ ainsi obtenue est prête à être mélangée à une poudre d'UO₂ en vue de l'obtention de pastilles d'UO₂/PuO₂.

### Références citées

[1] WO-A-00/30978
[2] WO-A-2019/038497

## Revendications

1. Procédé de préparation d'une poudre comprenant un ou plusieurs oxydes choisis parmi l'oxyde d'uranium UO₂, l'oxyde de plutonium PuO₂ et les oxydes d'actinides mineurs, les actinides mineurs étant choisis parmi l'américium, le neptunium et le curium, comprenant les étapes de :
a) granulation cryogénique d'une solution aqueuse comprenant des cations choisis parmi les cations à base d'uranium, les cations à base de plutonium et les cations à base d'actinides mineurs ;
b) lyophilisation des granules obtenus en a) ; et
c) calcination des granules issus de b) ;
moyennant quoi la poudre est obtenue.

2. Procédé selon la revendication 1, dans lequel les cations présents dans la solution aqueuse soumise à l'étape a) sont associés à des anions pour former des composés salins et/ou sont associés à des ligands organiques pour former des complexes.

3. Procédé selon la revendication 1 ou la revendication 2, dans lequel la solution aqueuse soumise à l'étape a) est une solution aqueuse d'acide nitrique dans laquelle les cations sont associés à des ions nitrates.

4. Procédé selon la revendication 3, dans lequel la solution aqueuse soumise à l'étape a) comprend au moins un nitrate choisi parmi le nitrate d'uranyle UO₂(NO₃)₂, le nitrate de plutonium Pu(NO₃)₄ et les nitrates M(NO₃)ₓ, M étant l'un des actinides mineurs et x étant un nombre entier allant de 3 à 6.

5. Procédé selon l'une quelconque des revendications 1 à 4, dans lequel la solution aqueuse soumise à l'étape a) comprend, de plus, un ou plusieurs additifs choisis parmi les polymères organiques hydrosolubles, les composés organiques azotés et les mélanges de ceux-ci.

6. Procédé selon la revendication 5, dans lequel le ou les additifs sont présents en une quantité telle que la viscosité dynamique de la solution aqueuse ne dépasse pas 1000 mPa.s pour un taux de cisaillement de 1500 s⁻¹.

7. Procédé selon la revendication 6, dans lequel la viscosité dynamique de la solution aqueuse ne dépasse pas 100 mPa.s.

8. Procédé selon l'une quelconque des revendications 5 à 7, dans lequel le ou les polymères organiques hydrosolubles sont choisis parmi un alcool polyvinylique, un polyéthylène glycol, un poly(butyral de vinyle) et un latex acrylique.

9. Procédé selon l'une quelconque des revendications 5 à 7, dans lequel le ou les composés organiques azotés sont choisis parmi les composés amides et les composés amines.

10. Procédé selon l'une quelconque des revendications 1 à 9, dans lequel la solution aqueuse soumise à l'étape a) comprend une concentration totale en élément(s) actinide(s) allant de 5 g/L à 300 g/L.

11. Procédé selon l'une quelconque des revendications 1 à 10, dans lequel la calcination des granules est une calcination oxydante ou réductrice ou bien est une calcination qui est successivement oxydante puis réductrice.

12. Procédé selon l'une quelconque des revendications 1 à 11, dans lequel la poudre est une poudre d'UO₂, une poudre de PuO₂ ou une poudre comprenant un mélange d'UO₂ et de PuO₂, de préférence, une poudre comprenant un mélange d'UO₂ et de PuO₂.

13. Procédé de préparation de pastilles d'un combustible nucléaire, comprenant successivement les étapes de :
i) mise en œuvre d'un procédé selon l'une quelconque des revendications 1 à 12 pour la préparation d'une poudre ;
ii) compactage sous forme de pastilles de la poudre obtenue en i) ; et
iii) frittage des pastilles obtenues en ii).

14. Procédé de préparation de pastilles d'un combustible nucléaire selon la revendication 13, dans lequel le combustible nucléaire est un combustible MOX.
